# FASCICULE DE BREVET EUROPEEN

(11) **EP 2 130 397 B1**
(45) Date de publication et mention de la délivrance du brevet: **30.11.2016**
(21) Numéro de dépôt: 08788017.5
(22) Date de dépôt: 17.03.2008
(51) Int. Cl.: H04W 60/00

(54) **BOITIER TÉLÉMATIQUE D' ASSISTANCE AUTOMOBILE UTILISANT UN PROCÉDÉ DE SIGNALISATION D' UN TERMINAL DE COMMUNICATION SANS FIL**
AUTOMOBIL-TELEMATIKGEHAEUSE FUER EIN SIGNALISIERUNGSVERFAHREN FUER EIN DRAHTLOSES KOMMUNIKATIONSENDGERAET
AUTOMOBILE-ASSISTANCE TELEMATICS HOUSING USING A METHOD FOR SIGNALLING A WIRELESS COMMUNICATION TERMINAL

(30) Priorité: 21.03.2007 FR 0753956
(43) Date de publication de la demande: 09.12.2009
(73) Titulaire: Peugeot Citroën Automobiles SA, 78140 Vélizy-Villacoublay (FR)
(72) Inventeur: COUDYSER, Michael, F-75015 Paris (FR); STEINMETZ, Jean Gabriel, F-75011 Paris (FR)
(74) Mandataire: Vigand, Régis Louis Michel
(86) Numéro de dépôt international: PCT/FR2008/050458
(87) Numéro de publication internationale: WO 2008/135682

(56) Documents cités:
- US-A1- 2005 040 937
- US-B1- 6 393 285
- 3GPP: "Universal Mobile Telecommunications System (UMTS); Transferring of emergency call data (3GPP TR 22.967 version 7.0.0 Release 7)" mars 2006 (2006-03), ETSI TR 122 967 V7.0.0, PAGES 1-25 , ETSI, SOPHIA-ANTIPOLIS , XP014035379 * alinéas 3.2, 4.1, 6.1.3, 6.1.7, 8.1, 8.4, 8.4.1
- JEAN GABRIEL REMY ET AL: "Systèmes de radiommunications avec les mobiles (chapitre 14: Téléphone de voiture - systèmes sans localisation des mobiles)" 1992, EDITIONS EYROLLES, FR, PAGES 477-485 , PARIS , XP007903183 page 477 page 484

## Description

La présente invention concerne les services télématiques d'assistance automobile utilisés dans les véhicules pour permettre l'accès à des services extérieurs. Ces services, basés sur un échange de données entre le véhicule ou l'un de ses occupants avec un service distant, comprennent un boîtier télématique d'assistance automobile dans le véhicule. Ils sont particulièrement utilisés pour signaler à un centre d'assistance distant un véhicule ayant un besoin d'assistance. L'invention concerne plus précisément la signalisation échangée entre un tel boîtier et le réseau de communication utilisé pour joindre le service distant.

Elle se rapporte plus particulièrement à un procédé de signalisation d'un terminal de communication sans fil dans un réseau de communication cellulaire comportant une étape de scrutation de son environnement radio lors de la mise sous tension.

Le développement de ces boîtiers télématiques d'assistance automobile s'est fait parallèlement au développement de la téléphonie mobile et utilise généralement des fonctionnalités téléphoniques mobiles pour la communication entre le boîtier et les services extérieurs. La dernière génération de boîtiers se compose généralement d'un module de téléphonie mobile typiquement conforme à la norme GSM (*Global System for Mobile communications* en anglais ou Groupe Spécial Mobile) ou à toute autre norme de téléphonie mobile. Ce module de communication est souvent couplé à un module de géo-positionnement permettant de localiser précisément le véhicule, avec ou sans l'aide active d'un occupant. De cette manière, il est possible de proposer des services d'assistance où le boîtier télématique d'assistance automobile est en mesure de contacter un centre d'assistance en cas de problème survenant au véhicule. Le centre d'assistance peut alors déclencher des secours et venir en aide à l'occupant du véhicule. Pour permettre une meilleure prise en charge des problèmes pouvant survenir et cibler le type d'assistance dont l'occupant du véhicule a besoin, le service d'assistance tente généralement d'entrer en communication avec le véhicule ou son occupant de manière à obtenir des précisions sur le type de problème, ses causes et son degré de gravité.

Un module de communication sans fil, par exemple GSM, comme celui qui est intégré au boîtier télématique, communique par radio avec le réseau de communication auquel il appartient. Dans l'exemple du GSM, à la mise sous tension, un terminal doit être capable de fonctionner sur un réseau le plus rapidement possible. Le terminal balaye alors toutes les porteuses disponibles, ou alternativement une liste de porteuses issues d'une utilisation précédente, et mémorise celles qui supportent une voie balise, c'est-à-dire une voie de signalisation descendante utilisée par la station de base pour signaler certains paramètres relatifs à la cellule qu'elle contrôle. Le terminal recherche une cellule convenable dans la liste mémorisée ou constituée. Lorsque le terminal a trouvé une cellule convenable, il lit l'identité de la zone de localisation et s'inscrit auprès de cette cellule. Cette inscription se fait dans le cas du GSM par la procédure connue sous le nom de *IMSI ATTACH.*

Ensuite le terminal teste de manière périodique si les conditions d'une re-sélection de cellule sont remplies. Ce test est typiquement fait toutes les 5 secondes. Si le terminal trouve une cellule jugée plus adaptée, il reproduit l'opération d'inscription auprès de cette cellule.

De plus, lors d'un déplacement, la gestion de l'itinérance dans le réseau GSM doit répondre d'une part, à la nécessité pour le système de connaître en permanence la localisation de chaque mobile pour pouvoir le joindre, et d'autre part, à la nécessité pour le mobile de rester actif, c'est-à-dire en état de veille, de façon à signaler ses mouvements au système et ce, même en l'absence de communications usager.

Lors de la mise hors tension du terminal, celui-ci le signale au réseau par une opération connue sous le nom de *IMSI DETACH.*

Toutes ces opérations génèrent un important trafic de signalisation entre le terminal et le réseau de communication indépendamment des communications utiles passées ou reçues par le terminal. L'utilisation d'un tel système de communication par un boîtier télématique d'assistance automobile va générer un trafic auprès des réseaux de communication à l'échelle du parc automobile, pour un système d'assistance nécessitant très peu de communications utiles.

Le document "Universal Mobile Telecommunications System (UMTS); Transferring of emergency call data (3GPP TR 22.967 version 7.0.0 Release 7)", mars 2006 (2006-03), ETSI TR 122 967 V7.0.0, PAGES 1-25, ETSI, SOPHIA-ANTIPOLIS décrit un système embarqué d'assistance automobile ("In-vehicle system"). Le système embarqué comprend un module de communication adapté pour la mise en oeuvre d'un procédé de signalisation d'un terminal de communication sans fil dans un réseau de communication cellulaire. Le terminal effectue une scrutation de son environnement radio lors de la mise sous tension. En l'absence d'appel à passer ou de message à envoyer, le terminal reste muet vis-à-vis du réseau de communication et n'effectue pas un enregistrement au réseau. Le terminal effectue un enregistrement auprès d'une cellule sélectionnée lorsqu'un appel doit être passé ou qu'un message doit être envoyé.
Le document "Systèmes de radiocommunications avec les mobiles (chapitre 14: Téléphone de voiture - systèmes sans localisation des mobiles)", JEAN GABRIEL REMY ET AL, 1992, EDITIONS EYROLLES, FR, PAGES 477-485, PARIS, décrit des téléphones de voiture sans localisation.

L'invention a pour but de remédier aux inconvénients mentionnés ci-dessus en proposant un procédé de signalisation économe en utilisation de la ressource radio et adapté au fonctionnement d'un boîtier télématique d'assistance automobile. Ce procédé réduit les messages émis par le boîtier à des fins de signalisation par la définition d'un mode dans lequel le boîtier se contente d'écouter le réseau de communication et ne se signale auprès de lui uniquement lorsqu'il doit passer un appel. L'utilisation de ce procédé permet une diffusion large du service d'assistance tout en ayant un impact faible sur les réseaux de communication concernés.

L'invention est effectuée selon les revendications indépendantes 1 et 3.

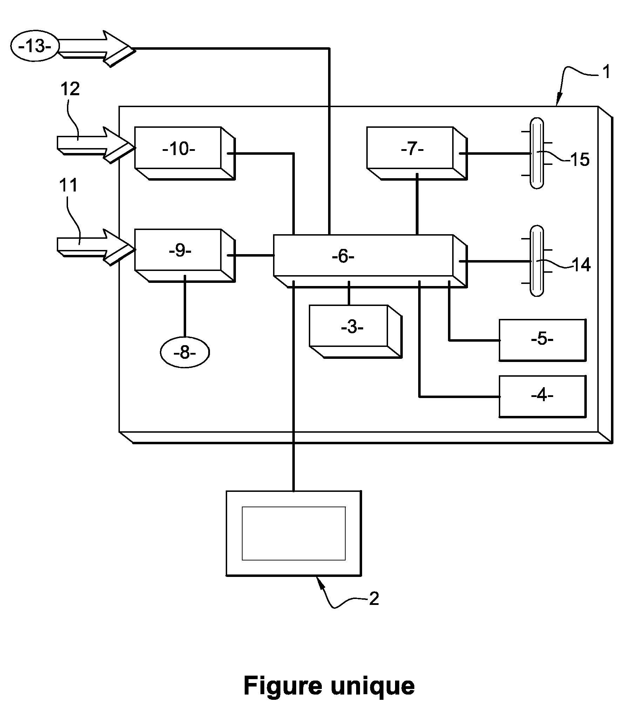

L'invention sera mieux comprise, et d'autres buts, caractéristiques, détails et avantages de celle-ci apparaîtront plus clairement au cours de la description explicative qui va suivre faite en référence à la figure unique donnée uniquement à titre d'exemple et qui représente l'architecture du boîtier télématique autonome conforme à l'invention.

Selon le mode de réalisation de l'invention représenté à la figure unique, le boîtier télématique d'assistance automobile référencé 1 est relié à deux boutons et une diode électroluminescente, référencés 2, situés dans l'habitacle du véhicule à portée du conducteur. De cette façon, ces boutons sont facilement accessibles par le conducteur en cas de problème pour déclencher la fonction d'alarme. Le boîtier est également alimenté par la batterie principale représentée par la flèche 11, connectée au bloc d'alimentation 9. Une batterie secondaire interne 8 est intégrée au boîtier et en permet l'alimentation en cas de dysfonctionnement de l'alimentation externe 11. Le bloc de gestion du bus de données 10, est connecté au bus du véhicule 12. Le boîtier est sous le contrôle principal du module GSM 6 *(Global System for Global communications* en anglais). Bien que l'exemple de réalisation décrive un module de communication basé sur la norme GSM, tout autre système de communication par radio peut être utilisé dans le cadre de l'invention, en particulier, les nouvelles normes de téléphonie mobile comme l'UMTS (*Universal Mobile Telecommunications System* en anglais) ou autre. Ce module est connecté au système de coussin de sécurité gonflable 13, mais il peut également être connecté sur tout dispositif permettant la détection d'une avarie ou d'un accident ou de tout autre problème survenant au véhicule ou au sein du véhicule. Lors d'un déclenchement du coussin de sécurité, un signal est envoyé au module de contrôle 6. Un module de géo-positionnement 7, par exemple du type GPS (*Global Positionning System* en anglais) est connecté au module de contrôle 6. Ce module permet de fournir au module de contrôle 6 une information sur la localisation du véhicule. De cette façon, le boîtier est à même de fournir au centre d'assistance des données relatives à la localisation géographique du véhicule ayant un besoin d'assistance. Il est également possible d'utiliser des moyens de géo-positionnement fournis par le système de téléphonie mobile cellulaire, bien que ceux-ci soient généralement moins précis. Le module de contrôle 6 du boîtier télématique autonome est également connecté à une antenne de communication radio 14. De manière similaire, une antenne 15 est connectée au module de géo-positionnement 7. Une carte à puce contient les informations sur l'identité de l'utilisateur. Cette carte se présente sous la forme d'une carte SIM *(Subscriber Identity Module* en anglais), référencée 3, intégrée au boîtier. Cette carte SIM est identique à celles qui sont utilisées dans les terminaux de téléphonie mobile et rend les mêmes services. Le mode de réalisation de l'invention prévoit la connexion d'un haut-parleur 4 et d'un microphone 5.

L'invention se base sur deux constats. D'une part, le service d'assistance automobile prévoit que les communications entre le centre distant et le véhicule sont toujours à l'initiative du boîtier télématique. En effet, même s'il est prévu que le centre appelle le véhicule, cet appel est toujours la conséquence du signalement par le véhicule d'un problème au centre distant. Dans ce cadre, il n'est pas nécessaire de prévoir que le réseau de communication soit en permanence à même de localiser le boîtier pour établir une communication entrante à destination de ce dernier. D'autre part, on estime que le nombre d'appels d'un tel boîtier est de l'ordre d'une dizaine pour sa durée de vie. On peut donc prévoir un fonctionnement dans lequel le boîtier doit être à même de passer un appel à tout moment tandis qu'il n'est pas pénalisant qu'il ne soit pas joignable ou qu'il le soit au prix d'une procédure de recherche coûteuse par le réseau.

Pour ce faire, on prévoit que le boîtier, contrairement à un terminal classique de téléphonie mobile, ne s'enregistre pas auprès des différentes cellules qu'il traverse tant qu'il n'a pas d'appel à passer. Il effectue les procédures d'écoute et de sélection de cellule conformément à la norme de télécommunication utilisée, en l'occurrence GSM, mais l'invention peut se généraliser à toute norme de communication sans fil cellulaire. Mais une fois une cellule convenable trouvée, la procédure d'enregistrement est inhibée. Lors du déplacement du véhicule, les procédures de re-sélection de cellule ont bien lieu. C'est-à-dire que le boîtier va, en permanence, scruter son environnement radio à la recherche de la meilleure cellule accessible. Ici encore, la procédure d'enregistrement auprès de cette cellule est inhibée.

La norme prévoit également une procédure de mise à jour de localisation pour un terminal. Cette procédure vise à signaler périodiquement et lorsque le terminal se déplace et change de zone de localisation, la nouvelle localisation du terminal.

La mise à jour de localisation intervient à l'initiative du mobile. Quand le mobile n'est pas en communication avec le réseau, il scrute l'identité de la zone de localisation dans laquelle il se trouve. Cette identité est émise sur la voie balise par les stations de base du réseau. Lorsqu'il détecte un changement de zone de localisation, le mobile engendre une mise à jour de localisation. Pour ce faire, il envoie un message à la station de base permettant au réseau de mémoriser la nouvelle zone de localisation dans laquelle se trouve le mobile.

De plus, la norme GSM prévoit une mise à jour de localisation périodique à l'initiative du mobile. La période de ces mises à jour est contrôlée par le réseau qui diffuse cette valeur sur la voie balise. Les valeurs possibles sont comprises entre 6 minutes et 24 heures. De plus, une valeur infinie est possible pour permettre d'annuler la procédure de mise à jour.

Dans la mise en oeuvre de l'invention, ces procédures de mise à jour de localisation sont également inhibées en l'absence d'appel d'assistance à passer. En l'absence d'appel à passer pour signaler un problème du véhicule, le boîtier télématique reste donc muet vis-à-vis du réseau de communication.

Lorsque le terminal doit passer un appel d'assistance, le fonctionnement nominal du module de communication du boîtier est rétabli. De cette façon, le terminal est à même d'être joint par le centre distant pour une communication relative à l'incident survenu. Ce rétablissement du fonctionnement nominal du module de communication peut durer un laps de temps prédéterminé ou encore durer jusqu'à la prochaine mise hors tension du boîtier. Ensuite, le boîtier se remet dans le mode de communication économe en signalisation décrit précédemment.

## Revendications

1. Boîtier télématique d'assistance automobile qui (1) comprend un module de communication (6) adapté pour la mise en oeuvre d'un procédé de signalisation d'un terminal de communication sans fil dans un réseau de communication cellulaire comportant les étapes suivantes :
- une étape de scrutation de son environnement radio lors de la mise sous tension ;
en l'absence d'appel à passer ou de message à envoyer, le terminal reste muet vis-à-vis du réseau de communication ;
en ce que le terminal sélectionne en permanence la cellule du réseau candidate pour un enregistrement en vue d'une communication sans effectuer d'enregistrement en l'absence d'un appel à passer ou de message à envoyer ;
en ce que Z le procédé de signalisation comporte en
outre une étape d'enregistrement auprès de la cellule sélectionnée lorsqu'un appel doit être passé ou qu'un message doit être envoyé ;
et en ce que le procédé de signalisation comporte en outre une étape de mise à jour de localisation périodique du terminal, pendant un laps de temps déterminé subséquemment au passage d'un appel ou à l'envoi d'un message permettant au terminal d'être joint.

2. Boîtier télématique d'assistance automobile selon la revendication 1, **caractérisé en ce que** ledit laps de temps déterminé s'étend jusqu'à la première mise hors tension du terminal.

3. Véhicule automobile **caractérisé en ce qu'**il comprend un boîtier télématique d'assistance automobile (1) 35 selon l'une quelconque des revendications précédentes.

## Patentansprüche

1. Automobilassistenz-Telematik-Box (1), die ein Kommunikationsmodul (6) umfasst, das für die Umsetzung eines Signalisierungsverfahrens eines drahtlosen Kommunikationsendgerätes in einem zellularen Kommunikationsnetz ausgeführt ist, die folgenden Schritte umfassend:
- einen Schritt zur Abfrage ihrer Funkumgebung beim Einschalten;
für den Fall, dass kein Anruf zu tätigen oder keine Nachricht zu versenden ist bleibt das Endgerät gegenüber dem Kommunikationsnetz stumm;
dadurch, dass das Endgerät permanent die Zelle des Kandidatennetzes für eine Speicherung im Hinblick auf eine Kommunikation auswählt, ohne bei Abwesenheit eines zu tätigenden Anrufes oder einer zu versendenden Nachricht eine Speicherung vorzunehmen;
dadurch, dass das Signalisierungsverfahren darüber hinaus einen Schritt zum Speichern an der ausgewählten Zelle umfasst, wenn ein Anruf zu tätigen oder eine Nachricht zu versenden ist;
und dadurch, dass das Signalisierungsverfahren darüber hinaus einen Schritt zur periodischen Lokalisierungsaktualisierung des Endgerätes innerhalb einer bestimmten Zeitspanne infolge der Tätigung eines Anrufes oder der Versendung einer Nachricht umfasst, wodurch das Endgerät erreicht werden kann.

2. Automobilassistenz-Telematik-Box nach Anspruch 1, **dadurch gekennzeichnet, dass** sich die besagte bestimmte Zeitspanne bis zum ersten Ausschalten des Endgerätes erstreckt.

3. Kraftfahrzeug, **dadurch gekennzeichnet, dass** es eine Automobilassistenz-Telematik-Box (1) nach irgendeinem der vorherigen Ansprüche umfasst.

## Claims

1. Automobile telematic assistance box (1) which includes a communication module (6) suitable for initiating a signalisation process of a wireless communication terminal in a cellular communication network including the following stages:
- a scanning stage for the radio environment when switching on;
in the absence of a call or message to send, the terminal remains silent vis-a-vis the communication network;
in that the terminal continuously selects the cell of the candidate network for registration in view of communication without affecting the recording in the absence of a call to put through or a message to send;
in that in addition the signalisation process includes a registration stage with the selected cell when a call needs to be put through or when a message needs to be sent;
in that furthermore the signalisation process includes a stage for periodically updating the terminal location, during a lapse of time determined subsequently to putting through the call or sending the message allowing the terminal to be contacted.

2. Automobile telematic assistance box according to claim 1 **characterised in that** the determined said time lapse extends until the box is switched off for the first time.

3. Automobile **characterised in that** it includes an automobile telematic assistance box (1) according to one of the preceding claims.
